# EUROPEAN PATENT SPECIFICATION

(11) **EP 3 967 872 B1**
(45) Date of publication and mention of the grant of the patent: **08.11.2023**
(21) Application number: 20382806.6
(22) Date of filing: 15.09.2020
(51) Int. Cl.: F03D 13/10, F03D 13/40, E04H 12/34

(54) **MOUNTING STRUCTURE FOR SUPPORTING A TOWER SECTOR**
MONTAGESTRUKTUR ZUR STÜTZUNG EINES TURMSEKTORS
STRUCTURE DE MONTAGE POUR SUPPORTER UNERTIE D'UNE TOUR

(43) Date of publication of application: 16.03.2022
(73) Proprietor: Siemens Gamesa Renewable Energy Innovation & Technology S.L., 31621 Sarriguren (Navarra) (ES)
(72) Inventor: Señas Perez, Vicente, 31015 Pamplona (ES)
(74) Representative: SGRE-Association

(56) References cited:
- AU-A1- 2018 429 852
- DE-U1-202017 006 845

## Description

The invention describes a mounting structure for supporting a tower sector, a respective mounting system, a special tower sector, a construction system and a method of connecting tower sectors.

Tall towers such as wind turbine towers are often constructed as towers with a closed wall (or "skin") by assembling tower sections. To this end, each tower section is equipped with flanges. In order to connect tower sections upon another or to connect them with a top element or to the ground, the tower sections comprise face flanges at their faces. Typically, the tower sections have a cylindrical shape with annular face flanges. Towers for wind turbines are known, for example, from AU 2018 429 852 A1 and DE 20 2017 006845 U1.

Especially in the technical field of wind turbines, towers that are constructed of tower sections are essential. Due to the increasing need of energy, the construction of bigger towers is of great importance. Generating more energy per turbine results in wind turbines with larger generators, which in turn need larger blades that are able to obtain more energy from the incident wind. These wind turbines then require taller and more stable towers to support blades, nacelle and other components of the wind turbine. Nowadays, for example, towers of wind turbines have diameters of about 6 to 8 meters.

Such tower-dimensions result in difficulties in transporting the tower from the manufacturing site to the construction site of the wind turbine. For example, a tower having a diameter of about 6 m cannot be transported over conventional roads. Thus, the tower is preferably constructed from said tower sections mentioned above.

In general, there are two types of tower sections: sections in the shape of a whole cylinder that are stacked upon another and sections in the shape of an arc-sector of a cylinder (a wall part with the cross section of a circler-arc) that have to be assembled to form a whole cylinder. The sections in the shape of an arc-sector of a cylinder are designated as "tower sectors" in the following to indicate that they are special tower sections not forming a whole cylinder.

A segmentation of a tower into tower sectors has the advantage that the transport is easier. For example, transporting of tower sectors having a breadth of less than 4 meters over conventional roads is possible. Thus, tower sectors can be transported to a construction site by trucks and then assembled to form a tower (or at least a closed tower section) on the construction site.

Often, the tower sectors have straight edge flanges at the edges of their skin surface perpendicular to the face flanges on their faces. In an erected position of the tower, the face flanges would be arranged horizontally and the edge flanges would be arranged vertically. In this case, the tower sectors are connected to each other by connecting these edge flanges with screws, bolts or rivets.

Typically, a number of tower sectors forming a complete cylinder are arranged to form the tower in a lying position (with horizontally arranged edge flanges). The edge flanges are connected with each other and the resulting tower (or tower section in form of a whole cylinder) is then turned upright.

A disadvantage of the state of the art is that this construction is extensive and especially requiring a serious amount of labour time, not only for the connection of the tower sectors, but for a proper arrangement of the tower sectors in a position that they can be correctly connected with another. For connecting the edge-flanges they have to be arranged to each other in a way that their facing surfaces are exactly on parallel planes, with their flange-holes overlapping.

It is the object of the present invention to improve the known systems, devices and methods to facilitate an improvement in assembling towers from tower sectors.

This object is achieved by a mounting structure for supporting a tower sector according to claim 1, a respective mounting system according to claim 7, a special tower sector according to claim 8, a construction system according to claim 10 and a method of connecting tower sectors according to claim 11.

It is made clear that the tower sectors mentioned in the following are wall parts of a tower, especially with a cylindrical and/or conical shape, typically with a closed wall ("skin"). An integer number of tower sectors can be assembled to form a tower or a tower segment forming the whole circumference of the tower. As said above, the tower sectors comprise face flanges at their faces, especially annular face flanges in the form of an arc corresponding to the face of the wall of the tower sector. On the edges perpendicular to the faces, the tower sectors preferably comprise straight edge flanges to be connected with other tower sectors. Although the whole circumference of a tower may be formed with more tower sectors, it is preferred that three tower sectors, each of an arc of 120°, or four tower sectors, each of an arc of 90°, are forming the circumference of the tower. In the following, often an example of three circular tower sectors of 120° forming a cylindrical tower will be used, without necessarily restricting the scope of the invention. The dimensions of the tower sectors are in the size range of meters, wherein the breadth is bigger than one meter, preferably bigger than 2 or even 3 meters, but preferably smaller than 5 meters, especially smaller than 4 meters to be able to be transported on conventional roads.

A mounting structure according to the invention is applicable (or designed) for supporting a tower sector with face flanges covering the curved faces of the surface shell of the tower sector with a predefined radius R, and two trunnions releasable fastened at a face flange so that the center of mass of the tower sector is between the trunnions of the flange. The tower sector is actually not part of the mounting structure, but its dimensions are well known and predefined. The length of the tower segment is not important and may be several meters or several decameters.

The mounting structure comprises a support frame with a base area on its bottom side designed to be mounted on a (plane) surface, e.g. on a floor, a groove or a rail. Since the support frame will be standing upright during use, the designations "bottom" or "top" will also be used in the following. The side of the base area, where the mounting structure is normally standing on is the bottom side and the opposite side is the top side.

The support frame comprises a first bearing and a second bearing, wherein each bearing is adapted for supporting a trunnion (of a tower sector), wherein the relative arrangement of the bearings on the support frame is such that the first bearing is positioned higher than the second bearing, and that the bearings lie on the arc of a circular sector with the radius R, a central angle <100°, a vertically oriented edge-radius outside the second bearing and a center of mass between the bearings.

This definition is better understood by recalling that the tower sector is not part of the mounting structure, but its dimensions are well known, especially its radius R. Since the trunnions are mounted on the face flanges with its center of mass between them, the cross section of the tower sector is this of an arc of a circle with mounting points (trunnions) on this arc. Thus, the bearings must lie on the arc of a circular sector with the radius R. The central angle of the arc should be <100°, since the tower sectors are typically thirds or quarters of a circle.

For assembling two tower sectors, they have to be arranged such that the planes of their adjacent edge flanges (the adjacent edge radii of the arcs) are parallel to each other. Furthermore, a vertically oriented edge-radius of the (theoretical) arc should lie outside the second bearing for a good accessibility for assembly. The center of mass of the arc (center point) must lie between the bearings for the stability of the setup.

Thus, when held in the mounting structure by gravity, the bottom wall at the edge of the tower sectors should be horizontal (i.e. the edge flanges are oriented vertical) and the top edges of the tower sectors protrude in the air. Thus, the first bearing is positioned higher than the second bearing to hold the top edged high, and the difference of the hight of the bearings and their horizontal distance is such as defined above, to securely and correctly hold a tower sector.

It can shortly be said that the bearings of the mounting structure are positioned such that a predefined tower sector with trunnions at predefined positions on the face flange can be held such that when the trunnions are mounted by the bearings, the edge of the wall part that is to be assembled with another tower sector is such that the edge radius (or the plane of an edge flange) of this edge is essentially vertical.

Since the dimensions of the breadth of a tower sector is in the order of meters, the dimensions of the mounting structure are also in the order of meters.

A mounting system according to the invention comprises at least two mounting structures according to the invention. The mounting structures are positioned in a line laterally reversed (e.g. mirrored) to each other on a guiding member, e.g. a groove, rail or plane. In order to relatively move the mounting structures relatively to each other on the guiding member such that the distance between the mounting structures can be adjusted, they are preferably connected to adjusting means designed to move the mounting structures. Such adjusting means can be ropes in a very easy setup, or a tractel. In a more elaborate setup, the adjusting means could be threaded bolts or hydraulic cylinders. The adjusting means can be fastened to the guiding member and one mounting structure or two mounting structures can be connected with each other via the guiding member. It is clear that the mounting structures are designed or adjusted such that two tower sectors can be positioned to form a continuous arc of a cylinder. Preferably, the mounting structures are arranged with their first bearings (for tower sectors facing down with their inner side) or their second bearings (for tower sectors facing up with their inner side) turned towards each other on the guiding member.

This mounting system is adapted to hold two tower sectors such that their facing edge flanges can be easily connected to each other by adjusting the distance between the mounting structures with the adjusting means. One mounting structure or both mounting structures will move on the guiding member and thus, the distance between the mounting structures can be reduced until the edge flanges meet. It should be noted that such mounting system should be installed at both ends of the tower sectors to hold them properly parallel.

A tower sector according to the invention is adapted for a mounting structure according to the invention. The tower sector comprises a curved surface shell and face flanges covering both faces of the curved faces of the surface shell and at least two trunnions releaseably fastened at a face flange, preferably at least two trunnions at each face flange, i.e. at least 4 trunnions in total, so that the center of mass of the tower sector lies between the trunnions of the flange. It is important that the center of mass lies between the two trunnions of a face flange, or when using more than two trunnions on a face flange, between the two most distanced trunnions, to securely hold the tower sector in the mounting structure. When erecting the assembled tower sectors to an upright position of the resulting tower, the trunnions may be released prior, along the way or after.

A construction system according to the invention comprises at least two tower sectors according to the invention, and at least two mounting systems according to the invention at least one mounting system arranged on each face of the tower sectors, wherein the trunnions of the tower sectors are mounted in the bearings of the mounting structures. Thus, the tower segments are arranged parallel to each other with their edge radii (or the planes of their facing edge flanges) are essentially vertical.

A method according to the invention of connecting tower sectors, the method comprising:
- Providing at least two tower sectors according to the invention.

Thus, the tower sectors are preferably transported such that the inner side of at least two tower sectors (to be assembled with another) is facing upwards, since then an optimal positioning of the tower sectors is very easy.
- Providing at least four mounting structures according to the invention.
- Providing at least two guiding members designed to guide the mounting structures.

It is clear that the guiding members have to be arranged on both sides of the tower sectors to guide the mounting structures on both sides. It is preferred that the guiding members are guiding rails or guiding grooves to provide a secure movement of the mounting structures. This is also valid for the above described construction system.
- Arranging the mounting structures on the guiding members such that two tower sectors can be arranged parallel and side by side with their trunnions in the bearings of the mounting structures, wherein any two mounting structures are arranged laterally transversed in a line, i.e. with their second bearings turned towards each other or with their first bearings turned towards each other.
- Arranging two of the tower sectors with their trunnions in the bearings of the mounting structures.

This can happen by lifting the tower sectors, preferably held horizontally, and lowering them such that the trunnions are introduced into the bearings. Due to the special shape of the mounting structures, while introducing trunnions of a tower sector into the first bearings (upper bearings) and further lowering the tower sector, the tower sector is tilted so that two oppositely introduced tower sectors together form an arc of a cylinder. The final position of the tower sectors should be such that the edge radii of the tower sectors (this would also be the edge-plane of the edge flanges) facing each other are both vertical. This means that the tangent lines of the respective edges of the tower sectors are oriented horizontally.
- Adjusting the distance between the tower sectors until the sides of the tower sectors facing each other (their edge flanges at these edges) meet.

Now the mounting structures are shifted towards each other until the edges tower sectors (especially their facing edge flanges) touch each other.
- Connecting the tower sectors, preferably by connecting the corresponding edge flanges.

Now it is very easy to connect the tower sectors either by welding, or particularly preferably by connecting their edge flanges by screwing, bolting or riveting.

The method is preferably performed by using a mounting system and/or a construction system according to the invention.

A wind turbine tower according to the invention is built by using a mounting structure according to the invention and/or by a method according to the invention. Since the mounting structure is only connected to the face flanges of the tower, there are no marks on the tower skin by conventional supporting means.

Particularly advantageous embodiments and features of the invention are given by the dependent claims, as revealed in the following description. Features of different claim categories may be combined as appropriate to give further embodiments not described herein.

According to the invention, the support frame is essentially L-shaped with a horizontal base part with the second bearing and a girder part that is especially arranged essentially perpendicular to the base area. It is preferred that the girder part has a forked end area so that a trunnion can be introduced in the first bearing from the end opposite to the base part (the top end).

According to a preferred mounting structure, the position of the first bearing is variable and can be releasable fixed. This means that before introducing a trunnion of a tower sector into the bearing, its height (e.g. in the girder) can be predefined. This feature does not refer to an adjustment when a trunnion is mounted in the bearing (for this, see following embodiments). This variable releasable fixing of the first bearing has the advantage that the mounting structure is usable for different sorts of tower sectors, e.g. quadrants of 90° and thirds of 120°. It is preferred that the support frame, especially its girder, comprises holes in different heights and a bolt matching in these holes and wherein the bearing is designed to be mounted with the bolt in different holes.

A preferred mounting structure comprises hight-adjusting means for the first and/or second bearing, preferably a threaded adjuster, a lifting platform a hydraulic adjuster or a pneumatic adjuster. These hight-adjusting means are adapted to adjust the position of a bearing when a trunnion is mounted in the bearing (see above). Since tower sectors have a serious weight, the hight-adjusting means should be adapted to lift this weight, at least half of this weight. It is preferred that the first bearing comprises a threaded or hydraulic adjuster and/or that the second bearing comprises a lifting platform.

A preferred mounting structure, comprises a base plate at the base area. The base plate is preferably broader than the support frame and arranged such that it has an overhang over at least the sides of the support frame and preferably also the end with the first bearing. This has the advantage that the danger of tilting of the mounting structure is reduced or prevented. It is preferred that the base plate has a flush fit with the support frame at the end with the second bearing. This has the advantage that two mounting structures can be moved very near each other to bring edge flanges of tower sectors into contact with each other.

According to a preferred mounting structure, the first and the second bearing are positioned such that the vertical distance of the bearings divided by their horizontal distance is bigger than 0.4, especially bigger than 0.6, and preferably smaller than 2.5, especially smaller than 1.5. Regarding a circular flange with the radius R with trunnions arranged in a certain central angle A (smaller than the angle covered by the tower segment), the ratio of the vertical:horizontal distance should be (1-cosA)/sinA.

The height H1 of the first bearing and the height H2 of the second bearing over the base area should be such that a tower sector is held so high above a ground that it does not touch it. With this design, the mounting structure can also be used as transport security element. To achieve that, with a predefined radius R of a tower, the height H1 of the first bearing should be bigger than 0.3 R (especially for a tower segment with an opening angle of 90°) or bigger than 0.5 R (especially for a tower segment with an opening angle of 120°), but preferably smaller than 1.2 R, especially smaller than R (independent of the opening angle).

According to a preferred method, the bearings are adjusted after the trunnions of the tower sectors are mounted by the bearings until the radii of the edges of the tower sector facing each other are parallel and the edges have a flush fit. If the edges have flanges, it is preferred that all flanges (the face flanges and the edge flanges have a flush fit, wherein the holes in opposite edge flanges should fit each other, so that the edge flanges can be connected by bolts, screws or rivets.

The tower sectors can preferably be mounted with their trunnions in special transport security units for transport. The transport security units can be stands with a number of bearings for the trunnions on one side of a number of tower sectors. Alternatively, the transport security units can have a base unit with bearings for the trunnions on one side of one tower sector, and stacking units with bearings to hold further trunnions, wherein the stacking units are designed to be stacked on the base unit.

Thus, according to a preferred method, a tower sector is moved to a construction site by using transport supporting systems (e.g. the above described transport security units) with bearings for the trunnions, especially wherein tower sectors are stacked by stacking the transport supporting systems. Thus, tower sectors already provided with trunnions can be delivered to the construction site. It is preferred to deliver tower sectors facing with their inner side upwards and tower sectors facing with their inner side downwards. This has the advantage that the tower sectors do not have to be turned for assembly. For example, if the tower is assembled with three 120° tower sectors, each two tower sectors should face upwards and one should face downwards (to be put upon the other two after assembly), if the tower is assembled with four 90° tower sectors, half of them should face upwards and the other half downwards.

According to a preferred method, the trunnions of a tower sector are introduced into the bearings of a mounting structure by the following steps:
- lifting the tower sector by lifting means, e.g. by a crane, in a horizontal position, especially with the trunnions essentially positioned horizontally,
- lowering the tower sector and introducing one trunnion in a first bearing of a mounting structure at each face of the tower sector,
- further lowering the tower sector until the other trunnions of the tower sector are introduced in a second bearing of the mounting structures at each side of the tower sector,
- Optional: releasing the lifting means from the tower sector.

Preferably, the length of the support frame is bigger than 1 m, especially bigger than 1.5 m, but preferably shorter than 10 m, especially shorter than 6 m. The same dimension ranges are also preferred for the height. Preferably, the breadth of the supporting member is bigger than 5 cm, especially bigger than 10 cm, but preferably smaller than 1 m, especially smaller than 0.5 m.

Other objects and features of the present invention will become apparent from the following detailed descriptions considered in conjunction with the accompanying drawings. It is to be understood, however, that the drawings are designed solely for the purposes of illustration and not as a definition of the limits of the invention. All figures are perspective and/or schematic.
Figure 1 depicts a wind turbine built with a tower in accordance with the present invention,
Figure 2 shows a face flange 2b of a tower sector 2a according to the invention,
Figure 3 shows stacked tower sectors ready for transport,
Figure 4 shows a tower sector with hangers,
Figures 5, 6 and 7 show the introduction of a tower sector into a mounting structure according to the invention,
Figure 8 shows figure 7 from another angle of view,
Figure 9 shows the forming of a tower-part using a construction system according to the invention with mounting systems according to the invention,
Figure 10 shows the assembly of a tower using a construction system according to the invention,
Figure 11 shows height-adjusting means in form of a threaded adjuster,
Figure 12 shows height-adjusting means in form of a lifting platform,
Figure 13 shows a schematic block diagram of the process flow of a preferred method according to the invention.

In the diagrams, like numbers refer to like objects through-out. Objects in the diagrams are not necessarily drawn to scale.

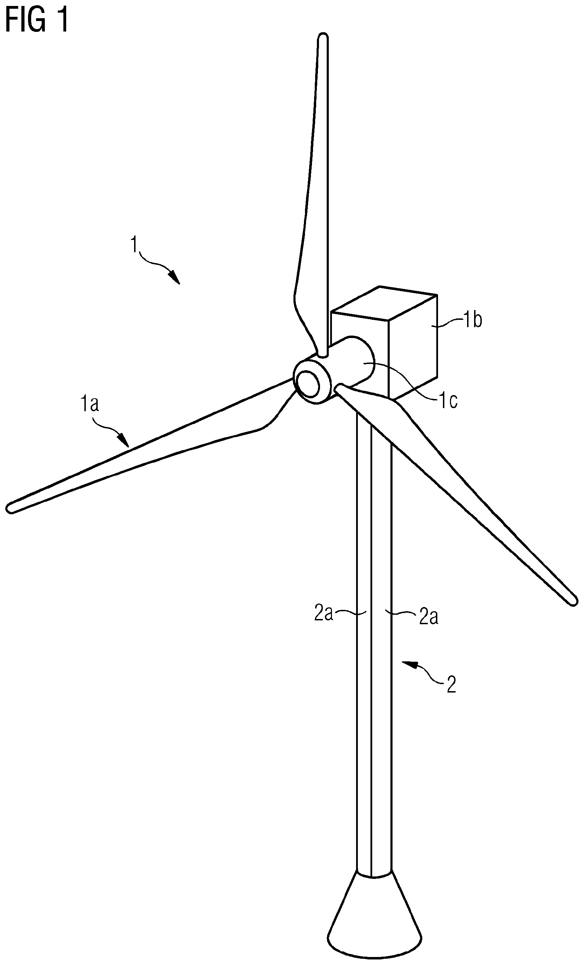

Figure 1 depicts a wind turbine 1 in accordance with embodiments of the present invention. The wind turbine 1 includes one or more rotor blades 1a on a rotor 1a that connect to a hub 1c of the wind turbine 1. The hub 1c is connected to a nacelle 1b that is atop a wind turbine tower 2 built from essentially identical tower sectors 2a.

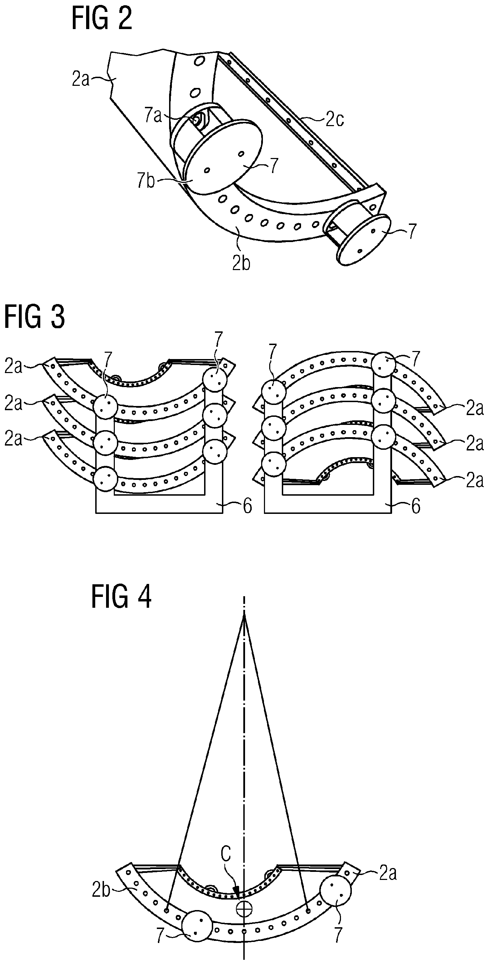

Figure 2 shows a face flange 2b of a tower sector 2a according to the invention. The tower sectors 2a comprise at least two trunnions 7 as shown in figure 1, releasable connected to each face flange 2b by bolting or screwing. Since the trunnions should be adjustable in their position, they comprise slotted holes 7a for their connection with the face flange 2b. Additionally, each trunnion 7 has an end plate 7b overhanging the other parts of the trunnion 7, preventing it from slipping out of a bearing.

Figure 3 shows stacked tower sectors 2a ready for transport or transported on the loading platform of a truck. The tower sectors 2a can be mounted with their trunnions 7 in transport security units 6. The transport security units 6 can be stands with a number of bearings for the trunnions 7 on one side of a number of tower sectors 2a, however, they can have a base unit with bearings for the trunnions 7 on one side of one tower sector 2a and stacking units with bearings to hold trunnions 7 that are designed to be stacked on the base unit.

Figure 4 shows a tower sector 2a held by a crane (not shown, only the hangers at the sides of the tower sector 2a), ready to be lifted and introduced in a mounting structure 3 according to the invention (see following figures). As can be seen, the center of gravity C lies between the trunnions 7 and the tower sector 2a is moved in a horizontal orientation. Shown is the preferred orientation for lower tower sectors 2a assembled to form a lying tower. The upper tower sectors 2a that should be put on already assembled tower sectors 2a like a roof should be lifted with their inner side facing down (i.e. upside down to the position shown in this figure).

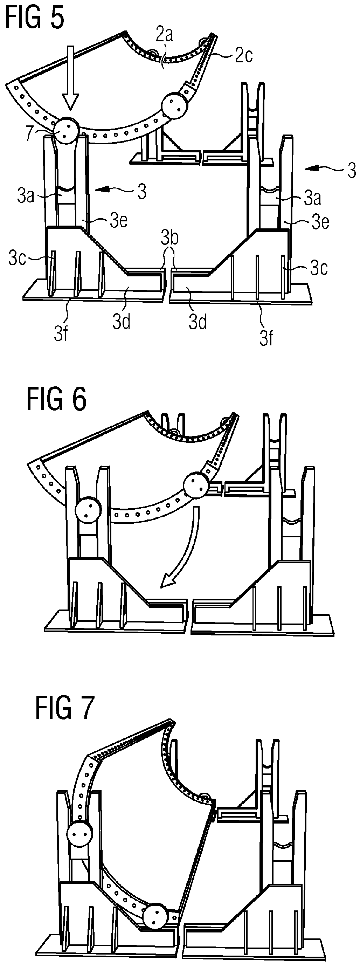

Figures 5, 6 and 7 shows the introduction of a tower sector 2a into a mounting structure 3 according to the invention. The mounting structure 3 comprises a support frame 3c that is essentially L-shaped with a horizontal base part 3d with the second bearing 3b and a girder part 3e that is especially arranged essentially perpendicular to the base area 3f. The girder part 3e has a forked end area so that a trunnion 7 can be introduced into the first bearing 2a from the upper end. The base area 3f is realized here as a base plate 3f that is broader than the support frame 3c and arranged such that it has an overhang over the sides of the support frame 3c and also the end with the first bearing 3a. This has the advantage that the danger of tilting of the mounting structure 3 is reduced or prevented. The base plate 3f furthermore has a flush fit with the support frame at the end with the second bearing 3b. This has the advantage that the two mounting structures 3 shown can be moved very near to each other to bring edge flanges of tower sectors 2a into contact with another.

The tower sector 2a lifted by a crane as shown in figure 4 is introduced in the mounting structure 3 with trunnions 7 of both face flanges 2b. The tower sector 2a is positioned with one trunnion 7 over the first bearing 3a, wherein the mounting structures should be arranged such on both sides of the tower sector 2a that the trunnions 7 can be introduced into the first bearing 3a simultaneously (figure 5). While lowering the tower sector 2a (see solid arrow in figure 5), the respective trunnions 7 will be held by the first bearings 3a and the tower sector 2a will tilt when further lowered since the respective trunnions 7 remain in the first bearings 3a (see the bent arrow in figure 6). When the other trunnions 7 of the tower sector 2a touch the second bearings 3b (see fig- ure 7), the hangers can be removed and the tower sector 2a should now be accurately positioned for connection with another tower sector 2a, i.e. the planes of the edge flanges 2c (or the radius of the edge) should now be vertical.

Shown is a 120°-tower sector (the opening angle of the arc is 120°). However, other tower sectors 2a, e.g. 90°-tower sectors, can be mounted in the mounting structure 3, also.

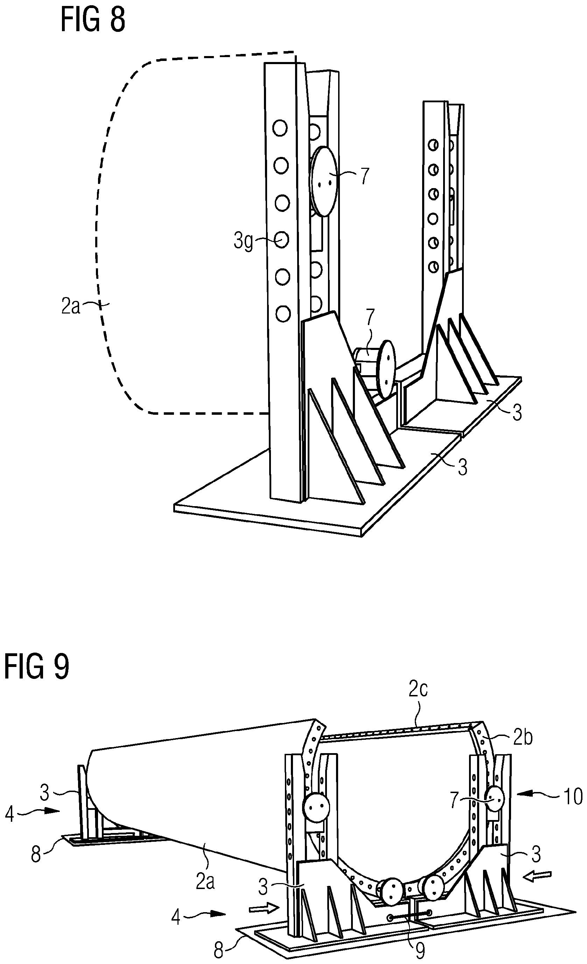

Figure 8 shows a view of figure 7 with an angle of view a bit more from the side. Holes 3g can be seen at the part of the structure holding the first bearing. These holes are used for varying the height of the first bearing 3a before introducing a trunnion 7. The first bearing can e.g. be held by bolts 3h (not shown here, but in figure 8) introduced through these holes 3g, wherein e.g. two bolts through two adjacent holes 3g can be used to firmly fix the first bearing 3a.

Figure 9 shows a construction system 10 according to the invention with two mounting systems 4 according to the invention (one mounting system 4 is partly covered by the tower segments 2a). This mounting system 4 comprises two mounting structures 3 as seen e.g. in figure 5, wherein the mounting structures 3 are positioned laterally reversed to each other so that the tilted tower sectors 2a are mirrored to each other. In this example, the second bearings 3b are facing each other. As can be seen, the lower edge flanges 2c are each positioned vertically and fit perfect to be connected with another.

The mounting structures 3 are positioned on a guiding member 8, here a rail, wherein the mounting structures 3 are connected by adjusting means 9, here e.g. a tractel, designed to move the mounting structures 3 relatively to each other on the guiding member 8. With this adjusting means 9, the distance between the mounting structures 3 can be adjusted (see arrows at the side) and the edge flanges 2c can be brought into contact with another.

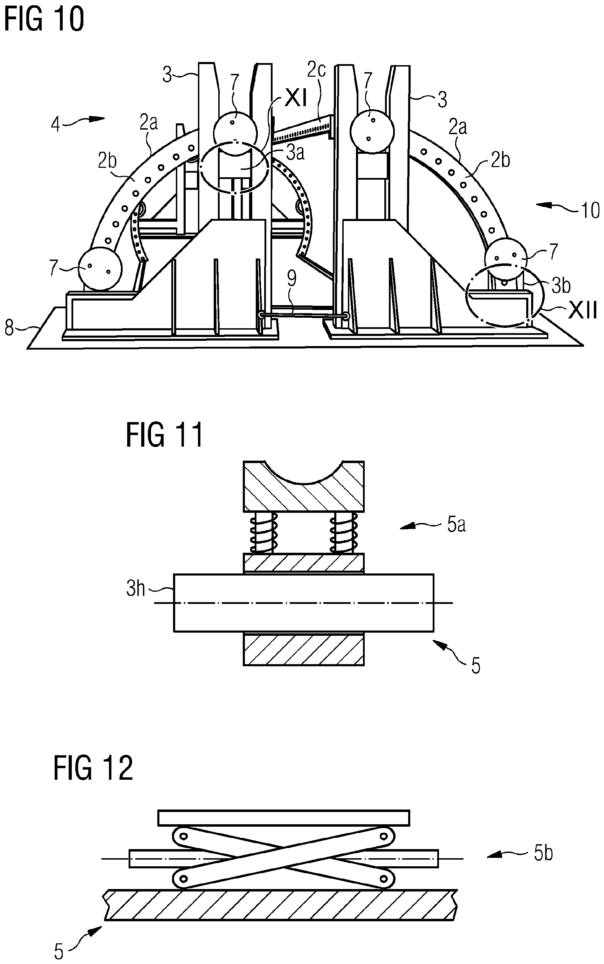

Figure 10 shows a variant of the construction system 10 of figure 7. This mounting system 4 also comprises two mounting structures 3 that are here also positioned laterally reversed to each other so that the tilted tower sectors 2a are mirrored to each other. However, since the tower sectors 2a are now facing with their inner sides down, the mounting sectors are here arranged that the first bearings 3a are facing each other. This setup is especially advantageous to arrange two 90°-tower sectors facing down to form a "roof" to be set upon two other 90°-tower sectors facing up already assembled. The setup can be built from the mounting system 4 shown in figure 7 just by re-arranging the mounting structures. As can be seen, the lower edge flanges 2c are each positioned vertically and fit perfect to be connected with another.

The mounting structures 3 are positioned on a guiding member 8, here a rail, wherein the mounting structures 3 are connected by adjusting means 9, here e.g. a tractel, designed to move the mounting structures 3 relatively to each other on the guiding member 8. With this adjusting means 9, the distance between the mounting structures 3 can be adjusted (see arrows at the side) and the edge flanges 2c can be brought into contact with another.

Since it could be possible to adjust the height and/or orientation of the tower sectors 2a for an easy assembly, the mounting system 4 shown here could comprise height-adjusting means 5 for the first and the second bearing (see e.g. figures 11 and 12 at positions indicated with roman numbers in figure 10). The first bearing comprises a threaded adjuster 5a (that could also be a hydraulic adjuster as shown in figure 11) and the second bearing comprising a lifting platform 5b as shown in figure 12. These height-adjusting means 5 could also be part of the system shown in figure 7.

Although the method of construction of a tower can be derived from the preceding figures, it is now described in summary.

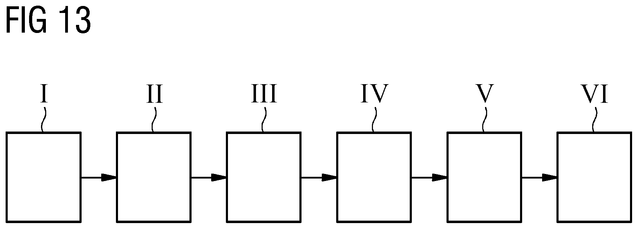

Figure 13 shows a block diagram of the process flow of a preferred method for connecting tower sectors 2a with predefined face flanges 2b covering the curved faces of the surface shell of the tower sectors 2a according to the invention.

In step I, at least two tower sectors 2a (preferably three or four tower sectors 2a forming a cylinder) are provided, by transporting them to the construction site. They can be transported as shown in figure 3 and lifted by a crane as shown in figure 4. The tower sectors 2a comprise at least two trunnions 7 connected to each face flange 2b as shown in figures 2 to 4.

In step II, at least two mounting structures 3 according to the invention (shown e.g. in figure 8) are provided. They can be transported or assembled on the construction site and be used for the assembly of several towers (or tower segments).

In step III, at least two guiding members 8 designed to guide the mounting structures 3 are provided as shown in figure 9 or 10. The guiding members should be already present at construction site and provided with mounting structures 3 when the tower sectors 2a are delivered to the construction site. Thus, mounting structures 3 are arranged such on the guiding members 8 in a line with their second bearings turned toward each other (see figure 9) or with their first bearings turned toward each other (see figure 10). It results in a mirrored setup of the mounting structures 3 as can be seen in figures 9 and 10 with the assumption, that the tower sectors 2a are to this point not arranged in the mounting structures 3.

Such setup should be present at both ends of an assembly site of a tower so that tower sectors 2a can be arranged with their trunnions 7 of both face flanges 2b in the respective mounting structures 3.

In step IV, a tower sector 2a lifted by a crane as shown in figure 4 is introduced in mounting structures 3 with the trunnions 7 of both face flanges 2b as shown in figures 5, 6 and 7. While lowering the tower sector 2a, trunnions 7 will be held by the first bearing 3a and the tower sector 2a will tilt when further lowered since the respective trunnions 7 remain in the first bearings 3a (see the process shown in figures 5 to 7). When the other trunnions 7 of the tower sector 2a touch the second bearings 3b, the hangers can be removed and the tower sector 2a should now be oriented ready for connection with another tower sector 2a, i.e. the planes of the edge flanges 2c should now be vertical.

Besides, this step also explains the advantage of the adjusting means 9 shown in figures 9 and 10: since when introducing a further tower sector 2a on the other side beneath an already positioned tower sector 2a the adjoining edge flanges may interfere with each other due to the tilting motion, the distance of the tower sections should first wider than after the introduction process. Thus, the tower sectors 2a have to be shifted to each other in order to connect them.

In step V this is done: the distance between the tower sectors 2a is adjusted until the sides of the tower sectors 2a (here the edge flanges 2c) facing each other meet, as shown in figure 9.

In step VI, the tower sectors are connected as shown e.g. in figures 9 and 10.

By the way, the edge flanges 2c meeting do not necessarily have to be the lower edge flanges 2c. Figure 8 shows a setup, where the upper edge flanges 2c meet for assembly. So, regarding tower sectors with an opening angle of 90°, first two tower sectors 2a with their inner sides facing up may be assembled like shown in figure 7, then two tower sectors 2a with their inner sides facing down may be assembled like shown in figure 10 (to form a "roof") and last the roof can be lifted and set on the bottom construction to be assembled to form a whole circular tower 2.

Although the present invention has been disclosed in the form of preferred embodiments and variations thereon, it will be understood that numerous additional modifications and variations could be made thereto without departing from the scope of the invention which is defined by the appended claims. For the sake of clarity, it is to be understood that the use of "a" or "an" throughout this application does not exclude a plurality, and "comprising" does not exclude other steps or elements. The mention of a "member", "means" or a "system" or similar does not preclude the use of more than one respective component.

## Claims

1. A mounting structure (3) for supporting a tower sector (2a) with face flanges (2b) covering the curved faces of the surface shell of the tower sector (2a) with a predefined radius R, and two trunnions (7) releasable fastened at a face flange (2b) so that the center of mass of the tower sector (2a) is between the trunnions (7), the mounting structure (3) comprising a support frame (3c) designed to be mounted on a surface with a base area (3f) on its bottom side, the support frame (3c) comprising a first bearing (3a) and a second bearing (3b), each bearing (3a, 3b) adapted for supporting a trunnion (7), wherein the relative arrangement of the bearings (3a, 3b) on the support frame (3c) is such that the first bearing (3a) is positioned higher than the second bearing (3b), and that the bearings (3a, 3b) lie on the arc of a circular sector with the radius R, a central angle <100°, a vertically oriented edge-radius outside the second bearing (3b) and a center of mass between the bearings (3a, 3b) , **characterized in that** the support frame (3c) is essentially L-shaped with a horizontal base part (3d) with the second bearing (3b) and a girder part (3e), wherein the girder part (3e) has a forked end area so that a trunnion (7) can be introduced in the first bearing (3a) from the end opposite to the base part (3d) .

2. The mounting structure (3) according to claim 1, wherein the girder part (3e) is arranged essentially perpendicular to the base area (3f).

3. The mounting structure (3) according to any of the preceding claims, wherein the position of the first bearing (3a) is variable and can be releasable fixed,
preferably wherein the support frame (3c) comprises holes (3g) in different heights and a bolt (3h) matching in these holes (3g) and wherein the first bearing (3a) is designed to be mounted with the bolt (3h) in different holes (3g).

4. The mounting structure (3) according to any of the preceding claims, comprising height-adjusting means (5) for the first and/or second bearing (3b), preferably a threaded adjuster (5a), a lifting platform (5b) a hydraulic adjuster or a pneumatic adjuster,
preferably wherein the first bearing (3a) comprises a threaded adjuster (5a) or hydraulic adjuster and/or the second bearing (3b) comprising a lifting platform (5b).

5. The mounting structure (3) according to any of the preceding claims, comprising a base plate (3f) at the base area (3f), the base plate (3f) preferably broader than the support frame (3c) and arranged such that it has an overhang over at least the sides of the support frame (3c) and preferably also the end with the first bearing (3a), preferably wherein the base plate (3f) has a flush fit with the support frame (3c) at the end with the second bearing (3b).

6. The mounting structure (3) according to any of the preceding claims, wherein the first and the second bearing (3b) are positioned such that the vertical distance of the bearings (3a, 3b) divided by their horizontal distance is bigger than 0.4, especially bigger than 0.6, and preferably smaller than 2.5, especially smaller than 1.5.

7. A mounting system (4) comprising at least two mounting structures (3) according to any of the preceding claims, the mounting structures (3) positioned laterally reversed in a line on a guiding member (8) and connected by adjusting means (9) designed to move the mounting structures (3) relatively to each other on the guiding member (8) such that the distance between the mounting structures (3) can be laterally adjusted.

8. A tower sector (2a) adapted for a mounting structure (3) according to any of claims 1 to 6, the tower sector (2a) comprising a curved surface shell and face flanges (2b) covering both faces of the curved faces of the surface shell and at least two trunnions (7) releasable fastened at a face flange (2b) so that the center of mass of the tower sector (2a) lies between the trunnions (7) of the face flange (2b), wherein a trunnion (7) is designed to be adjustably fixed on a face flange (2b), **characterized in that** said trunnion (7) comprises slotted holes (7a).

9. The tower sector (2a) according to claim 8, wherein a trunnion (7) has an end plate (7b) overhanging the other parts of the trunnion (7), preventing it from slipping out of a bearing (3a, 3b).

10. A construction system (10) comprising at least two tower sectors (2a) adapted for a mounting structure (3) according to any of claims 1 to 6, the tower sector (2a) comprising a curved surface shell and face flanges (2b) covering both faces of the curved faces of the surface shell and at least two trunnions (7) releasable fastened at a face flange (2b) so that the center of mass of the tower sector (2a) lies between the trunnions (7) of the face flange (2b), the tower sectors (2a) especially according to any of claims 8 to 9, and at least two mounting systems (4) according to claim 7, with a mounting system (4) arranged on each face of the tower sectors (2a), wherein the trunnions (7) of the tower sectors (2a) are mounted in the bearings (3a, 3b) of the mounting structures (3) of the mounting systems (4).

11. A method of connecting tower sectors (2a), the method comprising:
- providing at least two tower sectors (2a) adapted for a mounting structure (3) according to any of claims 1 to 6, the tower sector (2a) comprising a curved surface shell and face flanges (2b) covering both faces of the curved faces of the surface shell and at least two trunnions (7) releasable fastened at a face flange (2b) so that the center of mass of the tower sector (2a) lies between the trunnions (7) of the face flange (2b), the tower sectors (2a) especially according to any of claims 8 to 9,
- providing at least four mounting structures (3) according to any of claims 1 to 6,
- providing at least two guiding members (8) designed to guide the mounting structures (3),
- arranging the mounting structures (3) on the guiding members (8) such that two tower sectors (2a) can be arranged parallel and side by side with their trunnions (7) in the bearings (3a, 3b) of the mounting structures (3), wherein any two mounting structures (3) are arranged laterally transversed in a line,
- arranging two of the tower sectors (2a) with their trunnions (7) in the bearings (3a, 3b) of the mounting structures (3),
- adjusting the distance between the tower sectors (2a) until the sides of the tower sectors (2a) facing each other meet,
- connecting the tower sectors (2a),
the method preferably performed by using a mounting system (4) according to claim 7 and/or a construction system (10) according to claim 10.

12. The method according to claim 11, wherein the bearings (3a, 3b) are adjusted after the trunnions (7) of the tower sectors (2a) are mounted by the bearings (3a, 3b) until the radii of the edges of the tower sector (2a) facing each other are parallel and the edges have a flush fit.

13. The method according to claim 11 or 12, wherein a tower sector (2a) is moved to a construction site by using transport supporting systems (6) with bearings for the trunnions (7), especially wherein tower sectors (2a) are stacked by stacking the transport supporting systems (6).

14. The method according to one of claims 11 to 13, wherein the trunnions (7) of a tower sector (2a) are introduced into the bearings (3a, 3b) of a mounting structure (3) by the steps:
- lifting the tower sector (2a) by lifting means in a horizontal position, especially with the trunnions (7) essentially positioned horizontally,
- lowering the tower sector (2a) and introducing one trunnion (7) in a first bearing (3a) of a mounting structure (3) at each face of the tower sector (2a),
- further lowering the tower sector (2a) until other trunnions (7) are introduced in a second bearing (3b) of the mounting structures (3) at each side of the tower sector (2a),
- optionally: releasing the lifting means from the tower sector (2a).

## Patentansprüche

1. Montagestruktur (3) zum Stützen eines Turmabschnitts (2a) mit Stirnflächenflanschen (2b), die die gekrümmten Stirnflächen der Außenhaut des Turmabschnitts (2a) mit einem festgelegten Radius R bedecken, und zwei Zapfen (7), die lösbar an einem Stirnflächenflansch (2b) befestigt sind, sodass der Schwerpunkt des Turmabschnitts (2a) zwischen den Zapfen (7) liegt, wobei die Montagestruktur (3) einen Tragrahmen (3c) umfasst, der dazu ausgestaltet ist, an einer Fläche montiert zu sein, mit einer Grundfläche (3f) an dessen Unterseite, wobei der Tragrahmen (3c) ein erstes Lager (3a) und ein zweites Lager (3b) umfasst, wobei jedes Lager (3a, 3b) dazu eingerichtet ist, einen Zapfen (7) zu lagern, wobei die relative Anordnung der Lager (3a, 3b) am Tragrahmen (3c) dergestalt ist, dass das erste Lager (3a) höher positioniert ist als das zweite Lager (3b) und dass die Lager (3a, 3b) auf dem Bogen eines kreisförmigen Abschnitts mit dem Radius R, einem Mittelwinkel von <100°, einem vertikal orientierten Kantenradius außerhalb des zweiten Lagers (3b) und einem Schwerpunkt zwischen den Lagern (3a, 3b) aufliegen, **dadurch gekennzeichnet, dass**
der Tragrahmen (3c) im Wesentlichen L-förmig mit einem horizontalen Basisteil (3d) mit dem zweiten Lager (3b) und einem Trägerteil (3e) ist, wobei der Trägerteil (3e) eine gegabelte Endfläche aufweist, sodass ein Zapfen (7) vom dem Basisteil (3d) entgegengesetzten Ende in das erste Lager (3a) eingesetzt werden kann.

2. Montagestruktur (3) nach Anspruch 1, wobei der Trägerteil (3e) im Wesentlichen senkrecht zur Grundfläche (3f) angeordnet ist.

3. Montagestruktur (3) nach einem der vorstehenden Ansprüche, wobei die Position des ersten Lagers (3a) variabel ist und lösbar fixiert werden kann, vorzugsweise wobei der Tragrahmen (3c) Bohrungen (3g) auf unterschiedlichen Höhen und einen in diese Bohrungen (3g) passenden Bolzen (3h) umfasst und wobei das erste Lager (3a) dazu ausgestaltet ist, mit dem Bolzen (3h) in verschiedene Bohrungen (3g) montiert zu werden.

4. Montagestruktur (3) nach einem der vorstehenden Ansprüche, umfassend eine Höheneinstellungseinrichtung (5) für das erste und/oder zweite Lager (3b), vorzugsweise eine Schraubeinstellvorrichtung (5a), eine Hebebühne (5b), eine hydraulische Einstellvorrichtung oder eine pneumatische Einstellvorrichtung,
vorzugsweise wobei das erste Lager (3a) eine Schraubeinstellvorrichtung (5a) oder eine hydraulische Einstellvorrichtung umfasst und/oder das zweite Lager (3b) eine Hebebühne (5b) umfasst.

5. Montagestruktur (3) nach einem der vorstehenden Ansprüche, umfassend eine Grundplatte (3f) an der Grundfläche (3f), wobei die Grundplatte (3f) vorzugsweise breiter ist als der Tragrahmen (3c) und derart angeordnet ist, dass sie über zumindest die Seiten des Tragrahmens (3c) und vorzugsweise auch das Ende mit dem ersten Lager (3a) einen Überhang aufweist, vorzugsweise wobei die Grundplatte (3f) mit dem Tragrahmen (3c) an dem Ende mit dem zweiten Lager (3b) bündig abschließt.

6. Montagestruktur (3) nach einem der vorstehenden Ansprüche, wobei das erste und zweite Lager (3b) derart positioniert sind, dass die vertikale Entfernung der Lager (3a, 3b) geteilt durch ihre horizontale Entfernung größer als 0,4, insbesondere größer als 0,6, und vorzugsweise kleiner als 2,5, insbesondere kleiner als 1,5, ist.

7. Montagesystem (4), umfassend mindestens zwei Montagestrukturen (3) nach einem der vorstehenden Ansprüche, wobei die Montagestrukturen (3) in einer Linie an einem Führungselement (8) seitlich umgekehrt positioniert und mittels Einstelleinrichtungen (9) miteinander verbunden sind, die dazu ausgestaltet sind, die Montagestrukturen (3) am Führungselement (8) zueinander zu bewegen, sodass die Entfernung zwischen den Montagestrukturen (3) seitlich einstellbar ist.

8. Turmabschnitt (2a), der für eine Montagestruktur (3) nach einem der Ansprüche 1 bis 6 eingerichtet ist, wobei der Turmabschnitt (2a) eine gekrümmte Außenhaut und Stirnflächenflansche (2b), die beide Stirnflächen der gekrümmten Stirnflächen der Außenhaut bedecken, und mindestens zwei Zapfen (7), die lösbar an einem Stirnflächenflansch (2b) befestigt sind, sodass der Schwerpunkt des Turmabschnitts (2a) zwischen den Zapfen (7) des Stirnflächenflanschs (2b) liegt, umfasst, wobei ein Zapfen (7) dazu ausgestaltet ist, einstellbar an einem Stirnflächenflansch (2b) fixiert zu sein, **dadurch gekennzeichnet, dass** der Zapfen (7) Schlitzbohrungen (7a) umfasst.

9. Turmabschnitt (2a) nach Anspruch 8, wobei ein Zapfen (7) eine Endplatte (7b) aufweist, die über die anderen Teile des Zapfens (7) überhängt, wodurch verhindert wird, dass er aus einem Lager (3a, 3b) herausrutscht.

10. Konstruktionssystem (10), umfassend mindestens zwei Turmabschnitte (2a), die für eine Montagestruktur (3) nach einem der Ansprüche 1 bis 6 eingerichtet sind, wobei der Turmabschnitt (2a) eine gekrümmte Außenhaut und Stirnflächenflansche (2b), die beide Stirnflächen der gekrümmten Stirnflächen der Außenhaut bedecken, und mindestens zwei Zapfen (7), die lösbar an einem Stirnflächenflansch (2b) befestigt sind, sodass der Schwerpunkt des Turmabschnitts (2a) zwischen den Zapfen (7) des Stirnflächenflanschs (2b) liegt, umfasst, wobei die Turmabschnitte (2a) insbesondere nach einem der Ansprüche 8 bis 9 ausgelegt sind, und mindestens zwei Montagesysteme (4) nach Anspruch 7, wobei ein Montagesystem (4) an jeder Stirnfläche der Turmabschnitte (2a) angeordnet ist, wobei die Zapfen (7) der Turmabschnitte (2a) in den Lagern (3a, 3b) der Montagestrukturen (3) der Montagesysteme (4) montiert sind.

11. Verfahren zum Verbinden von Turmabschnitten (2a), wobei das Verfahren Folgendes umfasst:
- Vorsehen von mindestens zwei Turmabschnitten (2a), die für eine Montagestruktur (3) nach einem der Ansprüche 1 bis 6 eingerichtet sind, wobei der Turmabschnitt (2a) eine gekrümmte Außenhaut und Stirnflächenflansche (2b), die beide Stirnflächen der gekrümmten Stirnflächen der Außenhaut bedecken, und mindestens zwei Zapfen (7), die lösbar an einem Stirnflächenflansch (2b) befestigt sind, sodass der Schwerpunkt des Turmabschnitts (2a) zwischen den Zapfen (7) des Stirnflächenflanschs (2b) liegt, umfasst, wobei die Turmabschnitte (2a) insbesondere nach einem der Ansprüche 8 bis 9 ausgelegt sind,
- Vorsehen von mindestens vier Montagestrukturen (3) nach einem der Ansprüche 1 bis 6,
- Vorsehen von mindestens zwei Führungselementen (8), die dazu ausgestaltet sind, die Montagestrukturen (3) zu führen,
- Anordnen der Montagestrukturen (3) an den Führungselementen (8), sodass zwei Turmabschnitte (2a) parallel und nebeneinander mit ihren Zapfen (7) in den Lagern (3a, 3b) der Montagestrukturen (3) anordenbar sind, wobei zwei beliebige Montagestrukturen (3) seitlich quer in einer Linie angeordnet sind,
- Anordnen von zwei Turmabschnitten (2a) mit ihren Zapfen (7) in den Lagern (3a, 3b) der Montagestrukturen (3),
- Einstellen der Entfernung zwischen den Turmabschnitten (2a), bis die einander zugewandten Seiten der Turmabschnitte (2a) aufeinandertreffen,
- Verbinden der Turmabschnitte (2a),
wobei das Verfahren vorzugsweise durch die Verwendung eines Montagesystems (4) nach Anspruch 7 und/oder eines Konstruktionssystems (10) nach Anspruch 10 durchgeführt wird.

12. Verfahren nach Anspruch 11, wobei die Lager (3a, 3b) eingestellt werden, nachdem die Zapfen (7) der Turmabschnitte (2a) durch die Lager (3a, 3b) montiert sind, bis die Radien der einander zugewandten Kanten des Turmabschnitts (2a) parallel sind und die Kanten bündig abschließen.

13. Verfahren nach Anspruch 11 oder 12, wobei ein Turmabschnitt (2a) unter Verwendung von Transporttragsystemen (6) mit Lagern für die Zapfen (7) auf eine Baustelle bewegt wird, insbesondere wobei Turmabschnitte (2a) durch Stapeln der Transporttragsysteme (6) gestapelt werden.

14. Verfahren nach einem der Ansprüche 11 bis 13, wobei die Zapfen (7) eines Turmabschnitts (2a) mittels folgender Schritte in die Lager (3a, 3b) einer Montagestruktur (3) eingesetzt werden:
- Anheben des Turmabschnitts (2a) mittels einer Hebeeinrichtung in eine horizontale Position, insbesondere mit den Zapfen (7) im Wesentlichen in einer horizontalen Position,
- Absenken des Turmabschnitts (2a) und Einsetzen eines Zapfens (7) in ein erstes Lager (3a) einer Montagestruktur (3) auf jeder Stirnfläche des Turmabschnitts (2a),
- weiteres Absenken des Turmabschnitts (2a), bis weitere Zapfen (7) in ein zweites Lager (3b) der Montagestruktur (3) auf jeder Seite des Turmabschnitts (2a) eingesetzt sind,
- optional: Lösen der Hebeeinrichtung vom Turmabschnitt (2a).

## Revendications

1. Structure de montage (3) pour supporter un secteur de tour (2a) qui comporte des brides (2b) qui recouvrent les faces incurvées de la coque de surface du secteur de tour (2a) selon un rayon prédéfini R, et deux tourillons (7) qui sont fixés de façon libérable au niveau d'une bride (2b) de telle sorte que le centre de masse du secteur de tour (2a) soit situé entre les tourillons (7), la structure de montage (3) comprenant un bâti de support (3c) qui est conçu pour être monté sur une surface de telle sorte qu'une zone de base (3f) soit sur son côté de fond, le bâti de support (3c) comprenant un premier palier (3a) et un second palier (3b), chaque palier (3a, 3b) étant adapté pour supporter un tourillon (7), dans laquelle l'agencement relatif des paliers (3a, 3b) sur le bâti de support (3c) est tel que le premier palier (3a) est positionné plus haut que le second palier (3b), et que les paliers (3a, 3b) sont situés sur l'arc d'un secteur circulaire présentant le rayon R, qu'un angle au centre satisfait la condition angle au centre < 100°, qu'un rayon de bord orienté verticalement est à l'extérieur du second palier (3b) et qu'un centre de masse est situé entre les paliers (3a, 3b) ;
**caractérisée en ce que** :
le bâti de support (3c) est essentiellement en forme de L et comporte une partie de base horizontale (3d) qui est munie du second palier (3b) et d'une partie de poutre (3e), et dans laquelle la partie de poutre (3e) comporte une zone d'extrémité en forme de fourche de telle sorte qu'un tourillon (7) puisse être introduit dans le premier palier (3a) depuis l'extrémité qui est opposée à la partie de base (3d).

2. Structure de montage (3) selon la revendication 1, dans laquelle la partie de poutre (3e) est agencée essentiellement perpendiculairement à la zone de base (3f).

3. Structure de montage (3) selon l'une quelconque des revendications précédentes, dans laquelle la position du premier palier (3a) est variable et peut être fixée de façon libérable, de préférence dans laquelle le bâti de support (3c) comprend des trous (3g) selon différentes hauteurs et un boulon (3h) adapté en correspondance à l'intérieur de ces trous (3g) et dans laquelle le premier palier (3a) est conçu pour recevoir en montage le boulon (3h) dans différents trous (3g).

4. Structure de montage (3) selon l'une quelconque des revendications précédentes, comprenant un moyen de réglage de hauteur (5) pour le premier palier et/ou le second palier (3b), de préférence un moyen de réglage à filets (5a), une plate-forme de levage (5b), un moyen de réglage hydraulique ou un moyen de réglage pneumatique ;
de préférence dans laquelle le premier palier (3a) comprend un moyen de réglage à filets (5a) ou un moyen de réglage hydraulique et/ou le second palier (3b) comprend une plate-forme de levage (5b) .

5. Structure de montage (3) selon l'une quelconque des revendications précédentes, comprenant une plaque de base (3f) au niveau de la zone de base (3f), la plaque de base (3f) étant de préférence plus large que le bâti de support (3c) et étant agencée de telle sorte qu'elle comporte un surplomb au-dessus d'au moins les côtés du bâti de support (3c) et de préférence également de l'extrémité munie du premier palier (3a), de préférence dans laquelle la plaque de base (3f) est selon un ajustement à affleurement avec le bâti de support (3c) au niveau de l'extrémité munie du second palier (3b).

6. Structure de montage (3) selon l'une quelconque des revendications précédentes, dans laquelle le premier palier et le second palier (3b) sont positionnés de telle sorte que le résultat de la division de la distance verticale des paliers (3a, 3b) par leur distance horizontale soit supérieure à 0,4, tout particulièrement supérieure à 0,6 et de préférence inférieure à 2,5, tout particulièrement inférieure à 1,5.

7. Système de montage (4) comprenant au moins deux structures de montage (3) selon l'une quelconque des revendications précédentes, les structures de montage (3) étant positionnées en étant inversées latéralement selon une ligne sur un élément de guidage (8) et étant connectées par des moyens de réglage (9) qui sont conçus pour déplacer les structures de montage (3) de façon relative l'une par rapport à l'autre ou les unes par rapport aux autres sur l'élément de guidage (8) de telle sorte que la distance entre les structures de montage (3) puisse être réglée latéralement.

8. Secteur de tour (2a) adapté pour une structure de montage (3) selon l'une quelconque des revendications 1 à 6, le secteur de tour (2a) comprenant une coque de surface incurvée et des brides (2b) qui recouvrent les deux faces des faces incurvées de la coque de surface et au moins deux tourillons (7) qui sont fixés de façon libérable au niveau d'une bride (2b) de telle sorte que le centre de masse du secteur de tour (2a) soit situé entre les tourillons (7) de la bride (2b), dans lequel un tourillon (7) est conçu pour être fixé de façon réglable sur une bride (2b), **caractérisé en ce que** ledit tourillon (7) comprend des trous à fente (7a).

9. Secteur de tour (2a) selon la revendication 8, dans lequel un tourillon (7) comporte une plaque d'extrémité (7b) qui surplombe les autres parties du tourillon (7), ce qui empêche qu'il ne glisse hors d'un palier (3a, 3b).

10. Système de construction (10) comprenant au moins deux secteurs de tour (2a) adaptés pour une structure de montage (3) selon l'une quelconque des revendications 1 à 6, le secteur de tour (2a) comprenant une coque de surface incurvée et des brides (2b) qui recouvrent les deux faces des faces incurvées de la coque de surface et au moins deux tourillons (7) qui sont fixés de façon libérable au niveau d'une bride (2b) de telle sorte que le centre de masse du secteur de tour (2a) soit situé entre les tourillons (7) de la bride (2b), les secteurs de tour (2a) tout particulièrement selon l'une quelconque des revendications 8 et 9 et au moins deux systèmes de montage (4) selon la revendication 7, un système de montage (4) étant agencé sur chaque face des secteurs de tour (2a), dans lequel les tourillons (7) des secteurs de tour (2a) sont montés dans les paliers (3a, 3b) des structures de montage (3) des systèmes de montage (4).

11. Procédé de connexion de secteurs de tour (2a), le procédé comprenant :
- la fourniture d'au moins deux secteurs de tour (2a) adaptés pour une structure de montage (3) selon l'une quelconque des revendications 1 à 6, le secteur de tour (2a) comprenant une coque de surface incurvée et des brides (2b) qui recouvrent les deux faces des faces incurvées de la coque de surface et au moins deux tourillons (7) qui sont fixés de façon libérable au niveau d'une bride (2b) de telle sorte que le centre de masse du secteur de tour (2a) soit situé entre les tourillons (7) de la bride (2b), les secteurs de tour (2a) tout particulièrement selon l'une quelconque des revendications 8 et 9 ;
- la fourniture d'au moins quatre structures de montage (3) selon l'une quelconque des revendications 1 à 6 ;
- la fourniture d'au moins deux éléments de guidage (8) qui sont conçus pour guider les structures de montage (3) ;
- l'agencement des structures de montage (3) sur les éléments de guidage (8) de telle sorte que deux secteurs de tour (2a) puissent être agencés en parallèle et côte à côte avec leurs tourillons (7) dans les paliers (3a, 3b) des structures de montage (3) ;
dans lequel deux quelconques structures de montage (3) sont agencées en étant latéralement inversées selon une ligne ;
- l'agencement de deux des secteurs de tour (2a) avec leurs tourillons (7) dans les paliers (3a, 3b) des structures de montage (3) ;
- le réglage de la distance entre les secteurs de tour (2a) jusqu'à ce que les côtés des secteurs de tour (2a) se faisant face l'un l'autre ou les uns les autres se rencontrent ; et
- la connexion des secteurs de tour (2a) ;
le procédé étant de préférence réalisé en utilisant un système de montage (4) selon la revendication 7 et/ou un système de construction (10) selon la revendication 10.

12. Procédé selon la revendication 11, dans lequel les paliers (3a, 3b) sont réglés après que les tourillons (7) des secteurs de tour (2a) sont montés dans les paliers (3a, 3b) jusqu'à ce que les rayons des bords des secteurs de tour (2a) se faisant face l'un l'autre ou les uns les autres soient parallèles et que les bords présentent un ajustement à affleurement.

13. Procédé selon la revendication 11 ou 12, dans lequel un secteur de tour (2a) est déplacé jusqu'à un site de construction en utilisant des systèmes de support pour le transport (6) avec des paliers pour les tourillons (7), tout particulièrement dans lequel les secteurs de tour (2a) sont empilés en empilant les systèmes de support pour le transport (6).

14. Procédé selon l'une quelconque des revendications 11 à 13, dans lequel les tourillons (7) d'un secteur de tour (2a) sont introduits à l'intérieur des paliers (3a, 3b) d'une structure de montage (3) au moyen des étapes suivantes :
- le levage du secteur de tour (2a) à l'aide d'un moyen de levage dans une position horizontale, tout particulièrement de telle sorte que les tourillons (7) soient essentiellement positionnés horizontalement ;
- l'abaissement du secteur de tour (2a) et l'introduction d'un tourillon (7) dans un premier palier (3a) d'une structure de montage (3) au niveau de chaque face du secteur de tour (2a) ;
- l'abaissement encore du secteur de tour (2a) jusqu'à ce que d'autres tourillons (7) soient introduits dans un second palier (3b) des structures de montage (3) au niveau de chaque côté du secteur de tour (2a) ; et
- en option : la libération du moyen de levage vis-à-vis du secteur de tour (2a).
